(19) Europäisches Patentamt
European Patent Office
Office européen des brevets

(11) Publication number: **0 447 603 B1**

(12) **EUROPEAN PATENT SPECIFICATION**

(45) Date of publication of patent specification: **04.10.95**

(51) Int. Cl.[6]: **C09D 5/24**, C09D 183/02, C09D 183/14, C03C 17/25

(21) Application number: **90109357.5**

(22) Date of filing: **17.05.90**

(54) **Antistatic coating composition, manufacturing process thereof and antistatic and non-glare picture displaying screen utilizing the coating composition.**

(30) Priority: **13.03.90 KR 903340**

(43) Date of publication of application:
**25.09.91 Bulletin 91/39**

(45) Publication of the grant of the patent:
**04.10.95 Bulletin 95/40**

(84) Designated Contracting States:
**DE ES FR GB IT NL SE**

(56) References cited:
**EP-A- 0 301 104**
**US-A- 4 596 745**
**US-A- 4 830 879**

(73) Proprietor: **SAMSUNG DISPLAY DEVICES CO., LTD.**
**575, Shin-ri,**
**Taean-eub**
**Hwaseong-gun,**
**Kyungki-do (KR)**

(72) Inventor: **Sohn, Chang-min**
**278-1, Younghwa-dong,**
**Jangan-ku**
**Suwon,**
**Kyunggi-do (KR)**
Inventor: **Kim, Heon-su**
**264-11, Pogwang-dong,**
**Yongsan-ku**
**Seoul (KR)**

(74) Representative: **WILHELMS, KILIAN & PARTNER Patentanwälte**
**Eduard-Schmid-Strasse 2**
**D-81541 München (DE)**

**EP 0 447 603 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

### Field of the Invention

The present invention relates to an antistatic and non-glare picture displaying screen, and particularly to an antistatic coating composition, a manufacturing method thereof, and an antistatic and non-glare picture displaying screen utilizing the coating composition.

### Background of the Invention

Mostly, glass or plastic is used as the transparent material for the picture displaying screen such as CRT, LCD, and show window. However, since glass and plastic are insulating material, their surface resistances are very high, so that electrostatic charges are liable to be accumulated thereon. If such electrostatic charges are accumulated, foreign materials such as dusts from the external air are adhered on the surface of the screen, with the result that the screen is contaminated, the resolution of the displayed picture is lowered, and the person who touches the screen may experience an electric shock. Especially, if electrostatic charges are accumulated on the base plate of an LCD, false operations may occur in such a form that a segment where the driving voltage is not applied is driven. Coming recently, in a CRT used as a computer monitor, the user's chance to contact the screen has become more frequent with the adoption of the screen contact data input system, for example, and accordingly, the problems of the false operations and the electric shock have become more serious.

Meanwhile, in the case of a flat panel, glass or plastic produces surface reflections, and therefore, the surface of the screen reflects the ambient light in the normal direction, with the result that the picture on the screen becomes unrecognizable. Such phenomenon becomes more severe proportionately to the intensity of the ambient light, and therefore, the low luminance displaying devices such as LCD and the like give a more unrecognizable picture if the displaying device is operated in the light with high luminance. Further, CRTs used in televisions and monitors produce also unclear pictures in such cases, and therefore, if they are watched for a long time, the eyes can be easily tired. Because of these problems, there has been felt a need for a non-glare or glare-reducing surface of the picture displaying screen.

Under such a circumstance, various proposals have been made in order to effect the non-glaring of the screen.

For example, there has been proposed a method of forming a rough surface on the screen by carrying out a mechnical grinding, or by carrying out a selective etching through the use of fluoric acid and the like. However, this has the disadvantages that contamination occurs during the processing, the screens can be damaged also during the processing, and the regeneration of the screens becomes impossible. Further, it deteriorates the transparency of the screen, and promotes catching dust, thereby lowering the resolution of the picture.

There has been another proposal that a plastic film or aqeous alkali silicate solution (the so-called water glass) is spread on the surface of the screen, but this has the disadvantages that a damage to the coating is liable to occur, and the organic solvent or the alkaline substance is liable to be eluted, thereby causing a white opaqueness, and deteriorating the resolution of the screen.

There has been still another proposal that a conductive metal is deposited on the surface of the screen through vapor deposition or by a sputtering method so that the antistatic and non-glaring characteristics are provided simultaneously.

Japanese Patent Laid-open No. 86-118932 discloses a method such that an alcohol solution of alkyl silicate having the chemical formula of $Si(OR)_4$ where R stands for an alkyl group is spread and polycondensated so that an $SiO_2$ coating having tiny pockmarks is formed. According to this method, not only non-glare but also antistatic characteristics can be obtained by grounding the coating, because the silanol group (≡ Si-OH) is reacted with the moisture of the atmosphere to result in conductibility.

However, according to this method, a high temperature baking at a temperature of 200° C or more has to be carried out to obtain a sufficient coating strength. However this not applicable to a transparent material such as plastic, and also no sufficient conductivity can be obtained because the silanol base is polycondensated during the baking process.

In order to overcome this, Japanese Patent Laid-open No. 86-118946 discloses a method such that an alcohol solution of alkyl silicate is spread and is baked at a low temperature. However, all these methods obtain ionic conductions which depend on the moisture of the external air, and therefore, they can not provide sufficient antistatic property in a dry region or in a dry season. Further, since the initial coating strength is very unstable, a damage is to be apt to occur, and degradation occurs with the lapse of time , so

that the stability and the durability are lowered.

Meanwhile, Japanese Patent Laid-open No. 86-16452 discloses a method such that an inorganic metal compound is put into silicate, thereby attempting to improve the conductivity. In this case, if the coating layer does not contain a conductive compound such as $SiO_2$ , the electric resistance of the coating layer can not be reduced. Further, the coating layer which contains an absorptive inorganic metallic compound such as $PdCl_2$ reduces its surface resistance by utilizing the absorbing property so that an antistatic property is obtained, and therefore, if the humidity of the external air is not high enough, the antistatic effect can not be obtained. Particularly, the durability of the coating layer such as the moisture resistant property and the chemical resistant property is very weak.

Meanwhile, Japanese Patent Publication Laid-open No. 88-131408 discloses a composition in which the conductive oxide particles are dispersed under the condition that the zirconia obtained from a zirconium salt is used as a matrix. However, this requires that complicated processes such as hydrolysis, filtering, cleaning, baking, crushing, de-alkalinizing and the like in forming the particles of the conductive oxide. Further, in preparing the composition, there are required a crushing device for the crushings, a dispersing device for uniformly distributing the ingredients, and an additive such as a growth retardant. Further, the resultant coating layer is porous, and therefore, the transparency of the screen is lowered.

EP-A-0301104 discloses a coating liquid for forming a conductive coating wich comprises a dispersion or solution of a zirconium oxyacid salt; this liquid further contains a conductive substance. The conductive substances are known substances. It is disclosed, that these substances are in the form of fine particles, the particle size of which is thoroughly discussed as well as their production. These conductive materials are in the form of particles (of selected size) resp. are corresponding mixtures of such particles.

The present invention is intended to overcome the above described disadvantages of the conventional techniques.

Therefore it is an object of the present invention to provide an antistatic coating composition in which the anti-electrostatic property is superior, the time-dependent degradation is very low, the transparency of the screen is not hurt, the durability is very superior, and the manufacturing is very easy.

It is another object of the present invention to provide a process for preparation of the antistatic coating composition which is mentioned above.

It is still another object of the present invention to provide an antistatic and non-glare picture displaying screen in which the above-mentioned antistatic coating composition is used.

For achieving the above objects, the antistatic coating composition according to the present invention comprises: a silicate solution obtained by partially hydrolysing a silicate substance; and
a conductive solution containing a conductive material wich is formed by doping a compound of different kind from the inorganic compound into the molecular water-containing oxides or hydroxides of the soluble inorganic compound,
wherein said silicate solution and said conductive solution being mixed to be subjected to a hydrolysis and to a poly-condensation to obtain said coating composition comprising a chemical bond between a silicate and a conductive material.

The hydrolysing silicate material should be desirably alkyl silicate (silicon alkoxide: $Si(OR)_4$, where R indicates an alkyl group), polyalkyl siloxane as a condensate thereof or a mixture thereof, e.g., ethyl silicate ($Si(OC_2H_5)_4$). As the organic solvent, it can be used as combination of one or two or more of an alcohol solvent and a polar solvent, such as alcohols, ketones and acetates, while a proper acid may be added as a catalyst depending on the use.

The partial hydrolysis is carried out by adding a small amount of an acid such as chloric acid or nitric acid and a small amount of water into the hydrolysing silicate material which is dissolved in an organic solvent, thereby forming a silicate solution.

Water soluble or organic solvent soluble inorganic compounds such Zr, Li, Sn, or In compounds may be desirably used in forming the conductive solution, and they have to be used in the form of molecular water-containing oxides or hydroxides according to the characteristic feature of the present invention. Thus, a stable conductive material with an Sb or Sn compound doped therein is formed, and a transparent conductive solution is formed by using the above-mentioned conductive material.

In achieving the above objects, the process for preparation of the transparent conductive solution containing the stable conductive material comprises the steps:

forming water-containing oxides solution including molecular water-containing oxides or hydroxides of a soluble inorganic compound which is hydrated by dissolving a soluble inorganic compound or hydrates thereof in organic solvent adding a small amount of water and/or base thereto;

adding a metallic compound of different kind from said soluble inorganic compound, or the hydrate thereof, to the water-containing oxides solution, agitating so that said same or different kind of metal

compound is doped with said water-containing oxides of the inorganic compound; and

peptizing the said opaque solution by adding sufficient amounts of water and acid to the opaque solution, and by heating and agitating.

Here, the soluble inorganic compound and the organic solvent should be desirably used in the forms mentioned above. For example, said soluble inorganic compound includes zirconium compound such as zirconium oxynitrate hydrate ($ZrO(NO_3)_2 \cdot 2H_2O$) or zirconium oxychloride hydrate ($ZrOCl_2.8H_2O$); Lithium compound such as Lithium nitrate ($LiNO_3$) or Lithium acetate ($CH_3COOLi$); tin compound such as tin chloride hydrate ($SnCl_4.nH_2O$); indium compound such as indium nitrate hydrate ($In(NO_3)_3 \cdot nH_2O$) or indium chloride hydrate ($InCl_2 \cdot nH_2O$).

Meanwhile, as the Sn or Sb compound to be doped therein, for example, antimony chloride ($SbCl_3$) or tin chloride hydrate ($SnCl_4.nH_2O$) may be used, and as the base to be added in a very small amount, for example, $NH_4OH$ may be used.

Meanwhile, since the conductive solution containing the conductive material in the form of molecular water-containing oxides or hydroxides of a soluble inorganic compound in which the same or different inorganic compound is doped is opaque in the solution state, if the conductive solution is used without modification by mixing it with the silicate solution, then the transparency of the coating layer can be aggravated. Therefore, sufficient amounts of water and acid have to be added, and the mixture has to be heated, agitated and peptized so as to provide a sufficient transparency.

In the antistatic coating composition of the present invention, which is prepared by mixing the above described conductive solution and the above described silicate solution, if the hydrolysing silicate material exceeds about 20 wt% of the whole composition, the viscosity of the composition is too much increased, and therefore, the silicate material should be desirably added by amounts of about 1 - 20 wt%.

Meanwhile, if the doped conductive material is added by the amount of less than about 0.03 wt%, a sufficient conductivity can not be obtained, while, if it is added by the amount of over 7 wt%, the strength of the coating layer can be aggravated. Therefore, about 0.03 - 7 wt%, and preferably about 0.1 - 5 w% is the desirable range. This content range is equivalent to about 0.02 - 6 wt% of the total amount of the conductive solution.

The antistatic picture displaying screen of the present invention, in which the above described coating composition is used, is manufactured in such manner that:

a silicate solution is formed by carrying out a partial hydrolysis on a silicate material;

a conductive solution is formed which includes a conductive material which is formed by doping a different inorganic compound into a hydroxide of a soluble inorganic compound;

the above silicate solution and the above conductive solution are mixed together, and the mixture is subjected to a hydrolysis and a polycondensation to form an antistatic composition solution before it is spread on the surface of a picture displaying screen; and

the coated layer is subjected to a baking at a temperature of 80 - 500° C, thereby finally obtaining an antistatic and non-glare coating layer.

The silicate solution and the conductive solution which are used in manufacturing the picture displaying screen of the present invention may be desirably prepared by the above described process according to the present invention.

The spreading can be carried out by applying a spin coating method, a dipping method or a spray coating method. Meanwhile, if the transparent material of the picture displaying screen is weak against heat in undergoing the baking process, that is, in the case of a synthetic resin such as a plastic and the like, the baking has to be carried out at a low temperature of below 150° C, i.e., 80 - 150° C. However, in the case where the transparent material is glass and the like, there is no such limitation because the baking can be carried out at a higher temperature. Further, the period of time required for the baking may be 5 - 60 minutes, and preferably 30 minutes which is a relatively short period of time.

The coating layer forming mechanism for the coating composition of the present invention is understood to be as follows.

The hydrolysing silicate material such as alkyl silicate is hydrolysed and a silanol group is formed.

$$\equiv Si-OR + H_2O \rightarrow \equiv Si-OH + ROH$$

This silanol group is polycondensated, and forms a siloxane bond, are formed and solidified.

$$\equiv Si-OH + RO-Si\equiv \rightarrow \equiv Si-O-Si\equiv + ROH$$
$$\equiv Si-OH + HO-Si\equiv \rightarrow \equiv Si-O-Si\equiv + H_2O$$

$$PMKn + nNH_4OH(NH_3 + H_2O) \rightarrow Mp(OH)n + nNH_3 + nHKnp$$

$$mSi(OR)_4 + rMp(OH)n \xrightarrow{\text{complexation}} Sim\,Mpr(OR)4m\,(OH)nr \xrightarrow{\text{Hydrolysis}} Sim\,Mpr(OH)4m + nr \xrightarrow{\text{condensation}} Sim\,Mpr\,O\,\frac{4m + nr}{2}$$

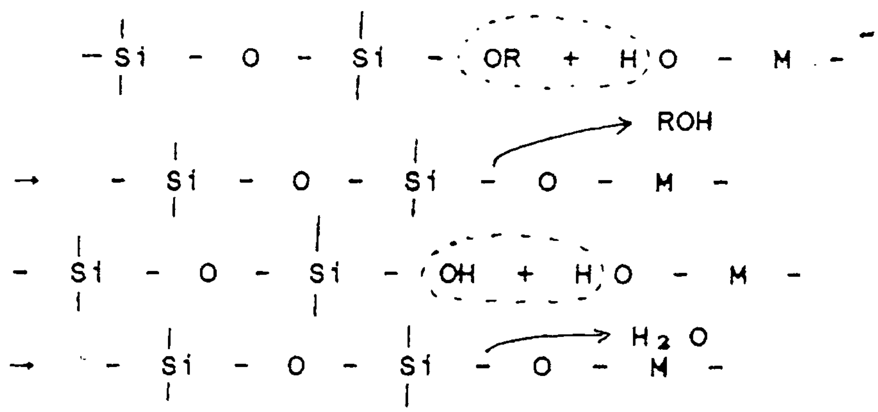

wherein Mp(OH)n is conductive hydroxides, M is inorganic element, K is nonmetallic element, and p,m and n are an integer, respectively.

Here, the silanol group absorbs moisture from the external air so as for it to gain a conductivity, and this is same as the disclosure of Japanese Patent Laid open No. 86-118932 in which an antistatic effect is obtained through the reduction of the surface resistance by means of the silanol group as described above.

Meanwhile, the siloxane bond plays a role in strongly attaching the silicate coating layer onto the surface of the picture displaying screen, and maintaining the self strength thereof, but, if the silanol group is to form the siloxane bonds, heating in the form of baking is required. Therefore, according to the above described conventional technique, the conductivity is gained through the residue silanol groups which are left without forming the siloxane bonds after the baking is carried out, and therefore, if the baking is insufficiently carried out, the strength of the coating layer becomes insufficient although the conductivity is sufficient, while, if the baking is sufficiently carried out, the conductivity is reduced although the strength of the coating layer is sufficiently maintained.

The above mentioned siloxans bonds form an irregular network type structure in their atomic arrangement, and in the case where a metal or a conductive compound thereof is added, strong bonds are formed because the metal atoms or the metallic compounds are cemented into the respective network spaces.

However, if the metal or the metallic compound which is added according to Japanese Patent Laid open No. 86-16452 takes the form of particles, even if the metal or the compound thereof is crushed to any fine form, the particles will be too large to be inserted into the network spaces, thereby bringing a failure to forming strong bonds. Further, the metal or the metallic compound is subjected to partial corrosions and detachments, and therefore, the strength of the coating layer is markedly lowered.

In view of the above described coating forming mechanism, the conductive material which is contained in the conductive solution of the coating composition according to the present invention takes the form of molecular water-containing oxides or hydroxides, and therefore, the conductive material can be easily coupled into the spaces of the network structure, with the result that the coating layer according to the present invention is superior in its water resistant and chemical resistant properties compared with the conventional antistatic coating layer, and shows a stabilized antistatic effect without being affected by the moisture of the surrounding air and by any other surrounding conditions.

Brief Description of the Drawings

The above objects and other advantages of the present invention will become more apparent by describing in detail the preferred embodiment of the present invention with reference to the attached drawings in which:

Figure 1 is a graphical illustration of the optical transmittances of the antistatic and non-glare coating layer which is formed with the coating composition according to the present invention; and

Figure 2 is a graphical illustration showing the relationship between the induced voltage and the time elapse, i.e., the static decay time for the conventional antistatic coating layer and the antistatic and non-glare coating layer formed with the coating composition according to the present invention.

Description of the preferred embodiments

Now the specific examples will be described referring to the drawings.

Example 1

Small amount of $NH_4$ OH was added into 5g of a solution of zirconium oxychloride hydrate ($ZrOCl_2.8H_2O$) in which 20ml of ethanol was is dissolved, and thereupon, a white opaque solution was obtained in which hydrated zirconium hydroxides were contained. Into this white opaque solution, there were added 5ml of water and a solution which was composed of 10ml of ethanol and 4.5g of tin chloride hydrate ($SnCl_4.nH_2O$), and the mixture was sufficiently agitated. Thus there was obtained a solution containing a conductive substance which is composed such that tin was uniformly doped in hydrated zirconium hydroxides. To this solution which was a white opaque solution sufficient amounts of water and acid, i.e., 20ml of water and 3ml of $HNO_3$ or HCl were added, and then, the mixture was heated up to a temperature of about 80° C and agitated, thereby obtaining a peptized transparent conductive solution.

Meanwhile, in a separate way, 20ml of ethyl silicate ($Si(OC_2H_5)_4$) solution was mixed with 450ml of a mixing solvent in which methanol and propanol were mixed in a ratio of 1:1, and then, small amounts of water and acid, i.e., 5ml of water and 3ml of $HNO_3$ or HCl were added into the mixture, thereby obtaining a silicate solution in which ethylsilicate was partially hydrolysed.

Then, the silicate solution and the conductive solution which were obtained through the above described processes were mixed together, and the mixture was subjected to a hydrolysis and to a polycondensation, thereby obtaining the antistatic and non-glare coating composition according to the present invention.

Meanwhile, the front panel of a CRT which was made of glass was cleaned off dusts, foreign materials and oils, the above described coating composition was spread on the panel, and then, the coated layer was dried, thereby completing the formation of the coating.

Then, the coated layer thus formed was subjected to a baking by heating it to a temperature of about 450° C for 30 minutes so as for an antistatic and non-glare coating layer to be formed, and then, the coating layer was grounded to the external graphite layer and/or to the anti-implosion band of the CRT by means of a conductive tape.

Example 2

Small amounts of water and base were added to a solution of lithium nitrate ($LiNO_3$) in alcohol, opaque solution thus obtained contains a hydrated molecular water-containing oxide of lithium. Then, into the opaque solution, water and alcohol solution containing a tin chloride hydrate ($SnCl_4.nH_2O$) were added, thereby obtaining another opaque solution containing a conductive material in which tin was uniformly doped in the hydrated molecular water-containing oxide of lithium. Then sufficient amounts of water and acid were added into the solution, and the mixture was agitated, thereby obtaining a transparent conductive solution.

Then, the above conductive solution and a silicate solution which was obtained in the same manner as that of Example 1 were mixed together so as for a coating composition to be formed, and then, the coating composition thus obtained was spread onto the front panel of a CRT. Then the spread coating layer was dried, and subjected to a baking by heating it to a temperature of 180° C, grounding being carried out thereupon.

Example 3

A base was added to an alcohol solution of tin chloride hydrate ($SnCl_4.nH_2O$) so as for a hydrated tin hydroxide solution to be obtained and then, water and an alcohol solution of antimony chloride ($SbCl_3$) were added to the solution. Then the mixture was agitated and peptized, thereby obtaining a transparent conductive solution containing a conductive material in which antimony is doped in hydrated tin hydroxide.

Then the transparent conductive solution was mixed with a silicate solution of ethylsilicate in which propanol and buthanol were mixed into a mixing solvent, and an antistatic and non-glare coating layer was formed in the same manner as that of Example 1. Then the coating layer was grounded after carried out a baking in which the heating temperature was 250° C.

Example 4

A base was added into an alcohol solution of indium nitrate hydrate ($In(NO_3)_3 \cdot nH_2O$) so as for a hydrated indium oxide solution to be formed, and, into the solution thus obtained, water and an alcohol solution of tin chloride hydrate ($SnCl_4.nH_2O$) were added. Then the mixture was peptized, thereby obtaining a transparent conductive solution containing a conductive material in which tin was doped in hydrated indium oxide.

Then the conductive solution thus obtained was mixed with a silicate solution in which ethyl silicate was dissolved in an organic solvent containing a mixture of methanol, ethanol, and methyl-iso-buthyl-keton. Then the mixture of the conductive solution and the silicate solution was formed into an antistatic and non-glare coating layer by applying the same process as that of Example 1, a baking was carried out at a temperature of 200° C for the coating layer, and then, the coating layer was grounded.

Comparative Example 1

(This is the antistatic coating utilizing the conductivity of the silanol group, which is disclosed in Japanese Patent Laid-open No. 86-118932).

a silicate solution which was formed by dissolving ethylsilicate ($Si(OC_2H_5)_4$) in ethanol ($C_2H_5OH$) was spread on the front panel of a CRT, and then, a baking was carried out at a temperature of 200° C for 30 minutes before grounding it, thereby forming a coating layer.

Comparative Example 2

(This is the antistatic coating which includes an inorganic metallic compound according to Japanese Patent Laid-open No. 86-16452).

A silicate solution which included a mixture of 45ml of lithium silicate solution, 1.75ml of palladium chloride ($PdCl_2$) and 455ml of distilled water was spread on the front panel of a CRT, and the spread coating layer was baked at a temperature of 120° C for 10 minutes so as for a coating layer to be formed, a grounding being carried out thereafter.

The evaluation of the examples of the present invention and the comparative examples will be presented below.

Figure 1 illustrates graphically the optical transmittances for the examples of the present invention, (The measurements were carried out using an instrument of Photal Company having Model No. MCPD100).

As to examples 1 to 4, the measurements were carried out for the visible light which comes within the wave length range of 380 - 720 nm, and the visible lights belonging to over 400 nm had a high transmittance of over 80%. Therefore, it was confirmed that the coating layers of Examples 1 to 4 according to the present invention had a high transparency to such extent that the resolving power of the picture displaying screen was not adversely affected.

The antistatic stability, i.e., the conductivity of the antistatic coating composition according to the present invention was confirmed through a water tank dipping test and a low humidity test.

That is, the product of Example 1 of the present invention and that of Comparative Example 2 were respectively immersed in a water tank containing pure water for 24 hours, and then, the surface resistances were checked, the results being as shown in Table 1.

Table 1 : Results of the Dipping Tests for antistatic coatings

(Dipping : 24 hours)

| Example 1 (Surface resistance) (Ω) | | Comparative Example 2 (Surface resistance) (Ω) | |
|---|---|---|---|
| Before dipping | After dipping | Before dipping | After dipping |
| $1.5 \times 10^{8}$ ∫ $9.3 \times 10^{9}$ | $2.0 \times 10^{9}$ ∫ $4.1 \times 10^{10}$ | $6.7 \times 10^{10}$ ∫ $2.2 \times 10^{11}$ | $8.0 \times 10^{12}$ ∫ over |

(The measurements were carried out using the Megaresta of shishido Electrostatic Company of Japan, and applying 500V.)

The optical glass which is used as the transparent material for the picture displaying screens has a surface resistance of $10^{11}$ - $10^{13}$ Ω at the room temperature, and therefore, the surface resistance of the coating layer which is usable as an antistatic coating should be about $10^{10}$ Ω at the maximum. Therefore, the coating layer of Comparative Example 2, in which inorganic metallic compound particles were included, showed a marked increase of the surface resistance, to such extent that the conductivity, i.e., the antistatic characteristics should be lost. On the other hand, the coating layer of Example 1 of the present invention did not show any significant variation of the surface resistance, and showed a strong water resistance and a stable conductivity.

Meanwhile, low humidity tests were carried out for Example 1 and Comparative Examples 1 and 2, and the results are shown in Table 2 below. (the above mentioned megaresta instrument and Statiron were used as the measuring apparatus.)

Table 2 shows the values of the surface resistances which were measured by applying a voltage of 500V after leaving the samples for 24 hours under the condition of a low relative humidity of RH 15 - 20%.

Table 2

| Results of Low Humidity Tests for antistatic coatings (tested after leaving the coating layers for 24 hours under RH - 15- 20 %) | | | |
|---|---|---|---|
| | Example 1 | Comp. Example 1 | Comp. Example 2 |
| Surface resistance (Ω) | $2.0\times10^{8}$ ~ $1.8\times10^{10}$ | $10^{12}$ or over | $8.4\times10^{11}$ ~ $10^{12}$ |

As can be seen in the above table, the coating layers of comparative Examples 1 and 2, in which the silanol group and inorganic metallic compound were respectively used, lose the antistatic characteristics under certain humidity conditions such as dry season and dry region. On the other hand, the coating layer of the present invention does not show any degradation of the conductivity, i.e., the antistatic characteristics under any low humidity condition as shown in the tank dipping tests.

Figure 2 illustrates graphically the variation of the induced voltage as against the elapsing of time for the antistatic coating layer on which a voltage was applied after leaving it for 24 hours under a low humidity condition (RH 15 - 20%). That is, the drawing shows the static decay time of the induced voltage (the above

mentioned Statiron being used as the measuring instrument).

In the examples of the present invention, the induced voltage at the time of applying the voltage is as low as 4KV, and is reduced to O V V within 2.2 seconds. Therefore, it is plainly clear that the antistatic effect of the coating layer of the present invention is very superior.

In contrast, Comparative Examples 1 and 2 respectively show an initial induced voltage of 50KV, and the static decay is very slow to such extent that the induced voltage shows to be 44KV in 35 seconds, and thereafter, the induced voltage is slowly reduced.

The coating layers of both comparative Examples 1 and 2 lose the conductivity under low humidity conditions, and therefore, such test results are understood to show the damping characteristics of the induction resistance of the glass itself which is the material of CRT.

As described above, the antistatic coating composition according to the present invention shows almost no variation under different humidity levels of the external air, this being the evidence that it has a stabilized antistatic effect. Further, the basic structure of the coating layer is composed of strong bonds, and therefore, it has a high water resistant property and a high chemical resistant property against chemicals such as acids and alkalies, thereby forming an excellent antistatic and non-glaring coating layer.

Further, the manufacturing process thereof does not require complicated steps such as crushings and spreadings, or additives, but is very simple and economical, and therefore, if it is left for a long time, rather hydrolysis and polycondensation are carried out in the conductive material, so that rather desirable effects should be brought, and that the pot life should be extended, thereby making it possible to store the coating layers for a long time.

## Claims

1. An antistatic coating composition comprising:
   a silicate solution obtained by partially hydrolysing a sililicate substance; and
   a conductive solution containing a conductive material wich is formed by doping a compound of different kind from the inorganic compound into the molecular water-containing oxides or hydroxides of the soluble inorganic compound,
   wherein said silicate solution and said conductive solution being mixed to be subjected to a hydrolysis and to a poly-condensation to obtain said coating composition comprising a chemical bond between a silicate and a conductive material.

2. The antistatic coating composition as claimed in claim 1, wherein said hydrolysed silicate consists of alkyl silicate, a polycondensate thereof, or a mixture thereof.

3. The antistatic coating composition as claimed in claim 1, wherein said organic solvent consists of alcohol, a polarized solvent, or a mixture thereof.

4. The antistatic coating composition as claimed in claim 1, wherein said soluble inorganic compound consists of Zr, Li, Sn or In, or a combination of two or more of them.

5. The antistatic coating composition as claimed in claim 1 or 4, wherein said different inorganic compound which is different from said soluble inorganic compound consists of an Sn compound or an Sb compound, or a mixture thereof.

6. The antistatic coating composition as claimed in claim 1, wherein said hydrolysed silicate substance is contained by the amount of 1 - 20 wt%, based on the total weight of said coating composition.

7. The antistatic coating composition as claimed in claim 1, wherein said conductive material in said conductive solution is contained in amounts of 0.03 - 7 wt%, based on the total weight of said coating composition.

8. A process for preparation of a transparent conductive solution, comprising:
   forming a hydroxide solution containing hydroxides of a soluble inorganic compound which is hydrated by adding a small amount of water and/or base, and by dissolving a soluble inorganic compound or a hydrate thereof;
   forming an opaque solution which is formed by doping said soluble inorganic compound or a different metallic compound into said molecular water-containing oxides or hydroxides of said inorganic

compound, and by agitating them after adding them; and

peptizing said opaque solution by adding sufficient amounts of water and acid, and by heating and agitating them.

**9.** The process as claimed in claim 8, wherein said soluble inorganic compound is dissolved in an organic solvent or in water.

**10.** The process as claimed in claim 9, wherein said soluble inorganic compound consists of a compound of Zr, Li, Sn or In, or a combination of two or more compounds thereof.

**11.** The process as claimed in any one of claims 8 to 10, wherein said different inorganic compound which is different from said soluble inorganic compound consists of a compound of Sn, or Sb, or a mixture thereof.

**12.** The process as claimed in claim 8, wherein said conductive solution is contained in amounts of 0.02 - 6 wt% based on the total weight of said transparent conductive solution.

**13.** An antistatic and non-glare picture displaying screen comprising:

a silicate solution formed by carrying out a partial hydrolysis on a silicate material; and

a conductive solution including a conductive material which is formed by doping a different inorganic compound into molecular water-containing oxides or hydroxides of a soluble inorganic compound,

wherein said silicate solution and said conductive solution are mixed together and the mixture is then subjected to hydrolysis and polycondensation, to form an antistatic composition solution comprising a chemical bond between a silicate and a conductive material, said antistatic composition solution being spread on the surface of the transparent panel of a picture displaying screen; and

said spread composition solution is subjected to baking at a temperature of 80~500 °C, thereby finally obtaining an antistatic and non-glare coating layer.

**14.** The antistatic and non-glare picture displaying screen as claimed in claim 13, wherein said transparent panel consists of glass.

**15.** The antistatic and non-glare picture displaying screen as claimed in claim 13, wherein said transparent panel consists of a synthetic resin, and said baking temperature is 80 - 150 ° C.

**16.** The antistatic and non-glare picture displaying screen as claimed in any one of claims 13 to 15, wherein the time period of the baking of said coating layer is 5 to 60 minutes.

**17.** The antistatic and non-glare picture displaying screen as claimed in claim 13, wherein said antistatic and non-glare coating layer is grounded.

**18.** The antistatic and non-glare picture displaying screen as claimed in claim 13, wherein the spreading of said antistatic coating composition is carried out by applying spin coating, dipping, or spray coating, or a combination thereof.

**Patentansprüche**

**1.** Antistatische Beschichtungszusammensetzung, enthaltend:

eine Silikatlösung, die durch partielle Hydrolyse einer Silikatsubstanz erhalten wird; und

eine leitfähige Lösung, die ein leitfähiges Material enthält, das gebildet wird durch Dopen einer Verbindung einer anderen Art als die anorganische Verbindung in die molekularwasserhaltigen Oxyde oder Hydroxyde der löslichen anorganischen Verbindung,

wobei die Silikatlösung und die leitfähige Lösung gemischt werden, um zu hydrolysieren und zu der genannten Beschichtungszusammensetzung zu polykondensieren, die eine chemische Bindung zwischen einem Silikat und einem leitfähigen Material aufweist.

**2.** Die antistatische Beschichtungszusammensetzung nach Anspruch 1, wobei das hydrolysierte Silikat aus Alkylsilikat, einem Polykondensat dieses Alkylsilikats oder deren Miechungen besteht.

**3.** Antistatische Beschichtungszusammensetzung nach Anspruch 1, wobei das organische Lösungsmittel aus Alkohol, einem polarisierten Lösungsmittel oder deren Mischung besteht.

**4.** Antistatische Beschichtungszusammsetzung nach Anspruch 1, wobei die lösliche anorganische Verbindung aus Zr, Li, Sn oder In oder einer Kombination von zwei oder mehr dieser Verbindungen besteht.

**5.** Antistatische Beschichtungszusammsetzung nach Anspruch 1 oder 4, wobei die verschiedene anorganische Verbindung, die von der löslichen anorganischen Verbindung verschieden ist, aus einer Sn-Verbindung oder Sb-Verbindung oder deren Mischungen besteht.

**6.** Antistatische Beschichtungszusammsetzung nach Anspruch 1, wobei die hydrolysierte Silikatsubstanz in Mengen von 1 - 20 Gew.%, bezogen auf das Gesamtgewicht der Beschichtungszusammensetzung, enthalten ist.

**7.** Antistatische Beschichtungszusammsetzung nach Anspruch 1, wobei dar leitfähige Material in der leitfähigen Lösung in Mengen von 0,03 - 7 Gew.%, bezogen auf das Gesamtgewicht der Beschichtungszusammsetzung, enthalten ist.

**8.** Verfahren zur Herstellung einer transparenten leitfähigen Lösung, wobei man
eine Hydroxydlösung herstellt, die Hydroxyde einer löslichen anorganischen Verbindung enthält, die durch Zugabe einer geringen Wassermenge und/oder Base hydratisiert wird, und indem man eine lösliche anorganische Verbindung oder deren Hydrat löst;
wobei man eine opaque Lösung bildet, die gebildet wird durch Dopen der löslichen anorganischen Verbindung oder einer verschiedenen metallischen Verbindung in die molekularwasserenthaltenden Oxyde oder -hydroxyde der anorganischen Verbindung, und indem man nach Zugabe rührt; und
indem man die opaque Lösung durch Zugabe ausreichender Mengen von Wasser und Säure und Erhitzen und Rühren peptisiert.

**9.** Verfahren nach Anspruch 8, wobei die lösliche anorganische Verbindung in einem organischen Lösungsmittel oder in Wasser gelöst wird.

**10.** Verfahren nach Anspruch 9, wobei die lösliche anorganische Verbindung aus einer Verbindung von Zr, Li, Sn oder In oder aus der Kombination von zwei oder mehr dieser Verbindungen besteht.

**11.** Verfahren nach einem der Ansprüche 8 - 10, wobei die verschiedene anorganische Verbindung, die verschieden von der löslichen anorganischen Verbindung ist, aus einer Verbindung von Sn oder Sb oder deren Mischung besteht.

**12.** Verfahren nach Anspruch 8, wobei die leitfähige Lösung in Mengen von 0,02 - 6 Gew.%, bezogen auf das Gesamtgewicht der transparenten leitfähigen Lösung, enthalten ist.

**13.** Antistatischer und nicht blendender Bildwiedergabeschirm enthaltend:
eine Silikatlösung, die gebildet wird, indem partielle Hydrolyse eines Silikatmaterials durchgeführt wird; und
eine leitfähige Lösung mit einem leitfähigen Material, die gebildet wird durch Dopen einer verschiedenen anorganischen Verbindung in molekularwasserhaltige Oxyde oder Hydroxyde einer löslichen anorganischen Verbindung,
wobei die Silikatlösung und die leitfähige Lösung vermischt werden, und die Mischung dann hydrolysiert und polykondensiert wird, um eine antistatische Zusammensetzungslösung zu bilden, die eine chemische Bindung zwischen einem Silikat und einem leitfähigen Material aufweist, wobei die antistatische Zusammensetzungslösung auf die Oberfläche des transparenten Paneels eines Bildwiedergabeschirms gebracht wird; und wobei die gesprühte Zusammensetzungslösung bei einer Temperatur von 80 - 500 ° C gebacken wird, wobei schließlich eine antistatische und nicht blendende Beschichtungsschicht erhalten wird.

**14.** Antistatischer und nicht blendender Bildwiedergabeschirm nach Anspruch 13, wobei das transparente Paneel aus Glas besteht.

**15.** Schirm nach Anspruch 13, wobei das transparente Paneel aus synthetischem Harz besteht, und die Backtemperatur 80 - 150° C beträgt.

**16.** Schirm nach einem der Ansprüche 13 - 15, wobei der Zeitraum des Backens der Beschichtungsschicht 5 - 60 Minuten beträgt.

**17.** Schirm nach Anspruch 13, wobei die antistatische und nicht blendende Beschichtungsschicht aufgerauht wird.

**18.** Schirm nach Anspruch 13, wobei das Aufbringen der antistatischen Beschichtungszusammensetzung durch Spinbeschichtung, Tauchen oder Sprühbeschichtung oder Kombinationen hiervon durchgeführt wird.

**Revendications**

**1.** Composition de revêtement antistatique comprenant : une solution de silicate obtenue par hydrolyse partielle d'une substance silicate ; et
une solution conductrice contenant une matière conductrice qui est formée par dopage, avec un composé dont la nature est différente de celle du composé minéral, d'oxydes ou d'hydroxydes contenant de l'eau moléculaire du composé minéral soluble,
où ladite solution de silicate et ladite solution conductrice sont mélangées pour être soumises à une hydrolyse et à une polycondensation pour obtenir ladite composition de revêtement comprenant une liaison chimique entre un silicate et une matière conductrice.

**2.** Composition de revêtement antistatique selon la revendication 1, où ledit silicate hydrolysé est constitué d'un silicate d'alkyle, d'un polycondensat de celui-ci ou d'un de leurs mélanges.

**3.** Composition de revêtement antistatique selon la revendication 1, où ledit solvant organique est constitué d'un alcool, d'un solvant polarisé ou d'un de leurs mélanges.

**4.** Composition de revêtement antistatique selon la revendication 1, où ledit composé minéral soluble est constitué de Zr, Li, Sn ou In ou d'une combinaison de deux ou davantage d'entre eux.

**5.** Composition de revêtement antistatique selon la revendication 1 ou 4, où ledit composé minéral différent qui est différent dudit composé minéral soluble est constitué d'un composé de Sn ou d'un composé de Sb ou d'un de leurs mélanges.

**6.** Composition de revêtement antistatique selon la revendication 1, où ladite substance silicate hydrolysée est contenue en une proportion de 1 à 20 % en poids relativement au poids total de ladite composition de revêtement.

**7.** Composition de revêtement antistatique selon la revendication 1, où ladite matière conductrice dans ladite solution conductrice est contenue en des proportions de 0,03 à 7 % en poids relativement au poids total de ladite composition de revêtement.

**8.** Procédé pour la préparation d'une solution conductrice transparente, comprenant :
la formation d'une solution d'hydroxyde contenant des hydroxydes d'un composé minéral soluble qui est hydraté par addition d'une petite quantité d'eau et/ou de base, et par dissolution d'un composé minéral soluble ou d'un hydrate de celui-ci ;
la formation d'une solution opaque par dopage, avec ledit composé minéral soluble ou un composé métallique différent, desdits oxydes ou hydroxydes contenant de l'eau moléculaire dudit composé minéral et par leur agitation après leur addition ; et
la peptisation de ladite solution opaque par addition de quantités suffisantes d'eau et d'acide et par leur chauffage et leur agitation.

**9.** Procédé selon la revendication 8, où ledit composé minéral soluble est dissous dans un solvant organique ou dans l'eau.

**10.** Procédé selon la revendication 9, où ledit composé minéral soluble est constitué d'un composé de Zr, Li, Sn ou In, ou d'une combinaison de deux ou davantage de ces composés.

**11.** Procédé selon l'une quelconque des revendications 8 à 10, où ledit composé minéral différent qui est différent dudit composé minéral soluble, consiste en un composé de Sn ou Sb ou un de leurs mélanges.

**12.** Procédé selon la revendication 8, où ladite solution conductrice est contenue en des proportions de 0,02 à 6 % en poids relativement au poids total de ladite solution conductrice transparente.

**13.** Ecran d'affichage d'image antistatique et non réfléchissant comprenant :

une solution de silicate formée par réalisation d'une hydrolyse partielle d'une matière silicate ; et

une solution conductrice comprenant une matière conductrice qui est formée par dopage, avec un composé minéral différent, d'oxydes ou hydroxydes contenant de l'eau moléculaire d'un composé minéral soluble,

où ladite solution de silicate et ladite solution conductrice sont mélangées ensemble et le mélange est ensuite soumis à une hydrolyse et à une polycondensation pour former une solution de composition antistatique comprenant une liaison chimique entre un silicate et une matière conductrice, ladite solution de composition antistatique étant étalée sur la surface du panneau transparent d'un écran d'affichage d'image ; et

ladite solution de composition étalée est soumise à une cuisson à une température de 80 à 500 °C pour obtenir finalement une couche de revêtement antistatique et non réfléchissante.

**14.** Ecran d'affichage d'image antistatique et non réfléchissant selon la revendication 13, où ledit panneau transparent est constitué de verre.

**15.** Ecran d'affichage d'image antistatique et non réfléchissant selon la revendication 13, où ledit panneau transparent est constitué d'une résine synthétique et ladite température de cuisson est de 80 à 150 °C.

**16.** Ecran d'affichage d'image antistatique et non réfléchissant selon l'une quelconque des revendications 13 à 15, où le temps de cuisson de ladite couche de revêtement est de 5 à 60 minutes.

**17.** Ecran d'affichage d'image antistatique et non réfléchissant selon la revendication 13, où ladite couche de revêtement antistatique et non réfléchissante est raccordée à la masse.

**18.** Ecran d'affichage d'image antistatique et non réfléchissant selon la revendication 13, où l'étalement de ladite composition de revêtement antistatique est effectué par revêtement centrifuge, immersion ou pulvérisation ou une de leurs combinaisons.

FIG. 1

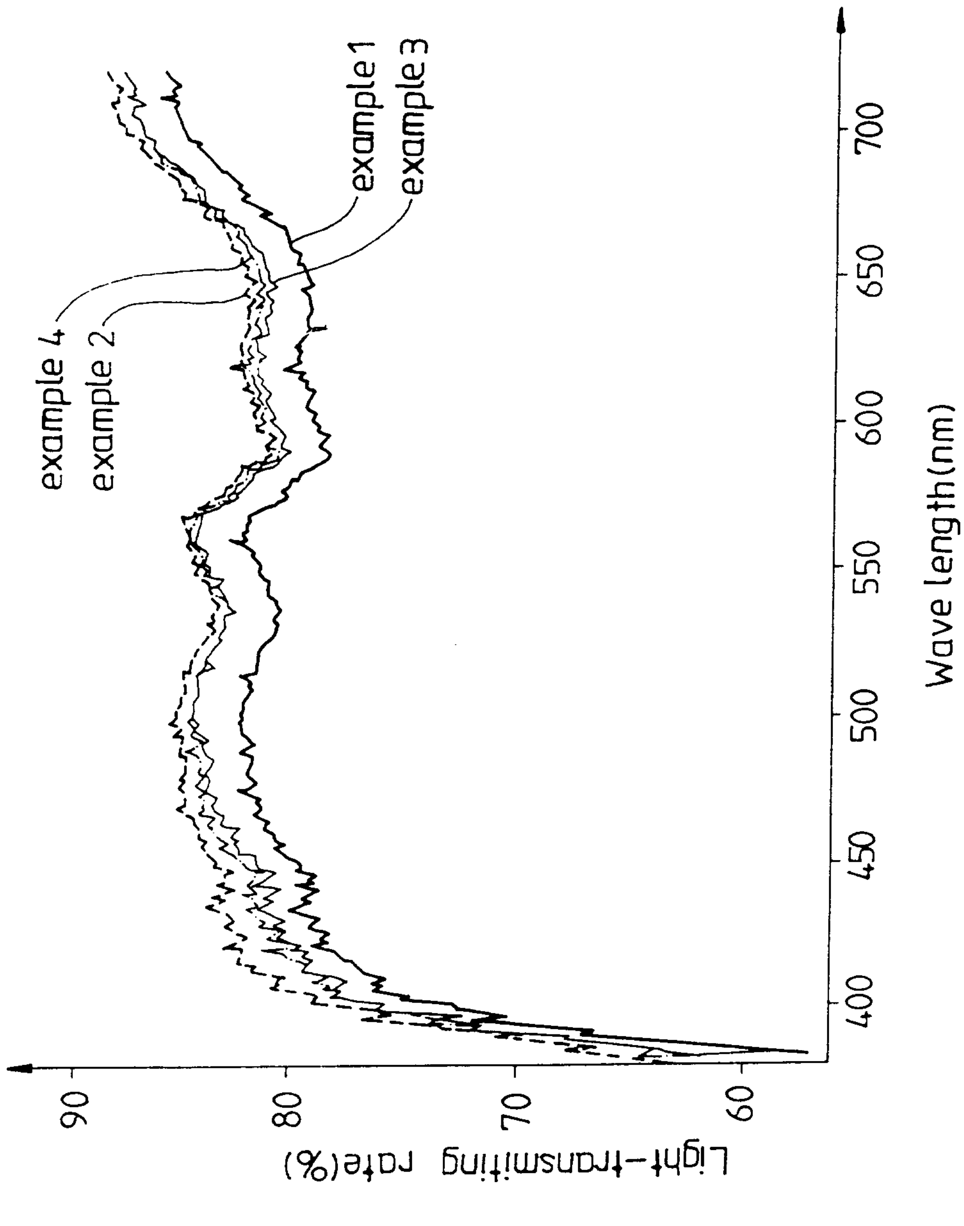
example 1
example 2
example 3
example 4
90
80
70
60
Light-transmitting rate(%)
400
450
500
550
600
650
700
Wave length(nm)

FIG. 2

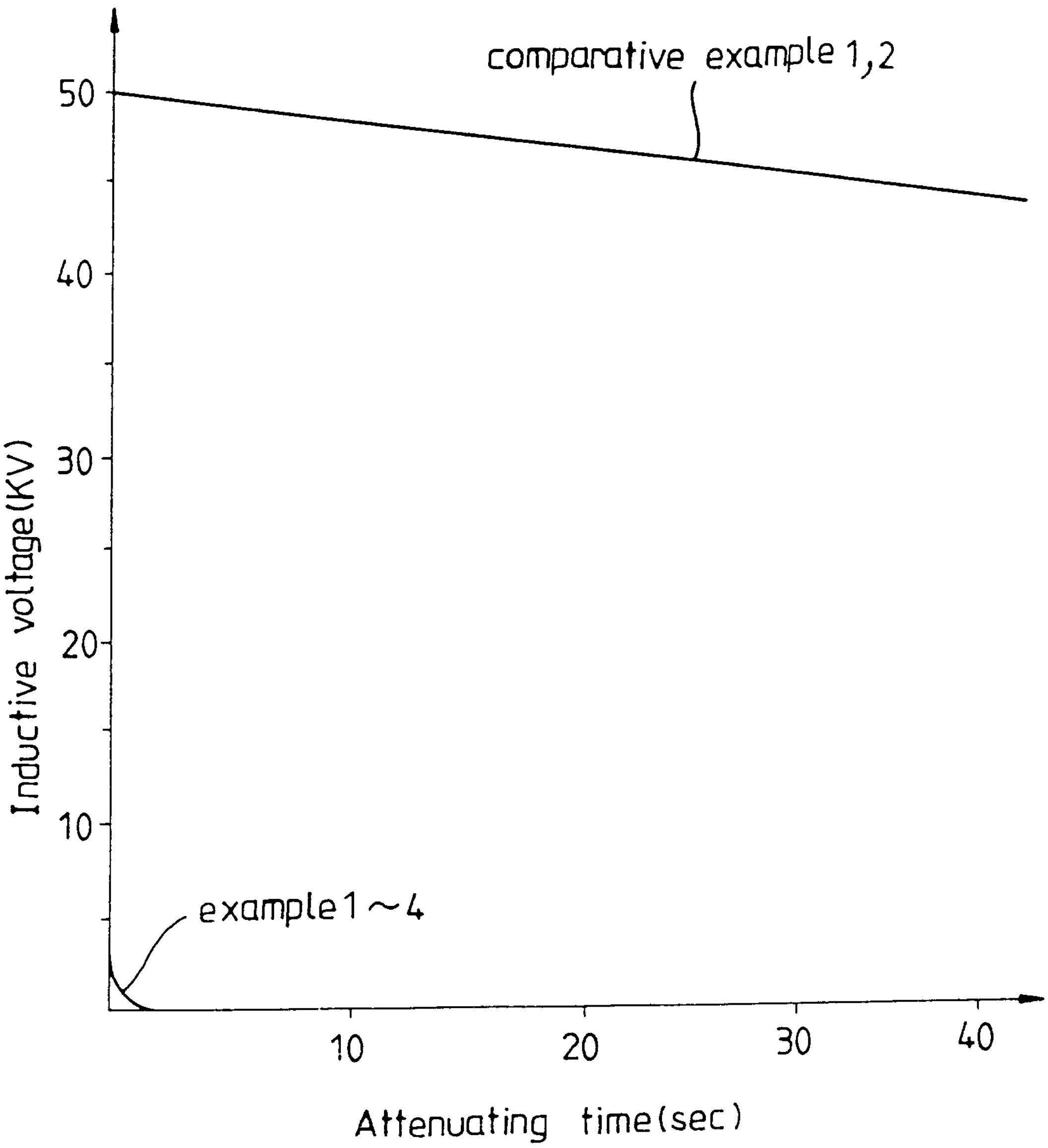
comparative example 1,2
example 1 ~ 4
50
40
30
20
10
Inductive voltage(KV)
10
20
30
40
Attenuating time(sec)